# EUROPEAN PATENT APPLICATION

(11) **EP 4 066 697 A1**
(43) Date of publication of application: **05.10.2022**
(21) Application number: 21166142.6
(22) Date of filing: 31.03.2021
(51) Int. Cl.: A47J 27/00, A47J 27/60, A47J 43/046, A47J 36/16, A47J 37/10

(54) **INSERT PLATE, COOKWARE AND MULTI-PURPOSE KITCHEN APPLIANCE**

(71) Applicant: BSH Hausgeräte GmbH, 81739 München (DE)
(72) Inventor: Cresnar, Mihael, 3205 Vitanje (SI)

(57) **Abstract**

Disclosed is an insert plate 10 for removable insertion into a pot 20 of a multi-purpose kitchen appliance. The insert plate 10 has a support surface 11 for food to be heated in the pot. Therein, the support surface 11 extends over a centre of the insert plate 10.

Further disclosed is a cookware 100 for/of a multi-purpose kitchen appliance. The cookware 100 comprises an insert plate 10 and a pot 20 configured to be combined with a base station of the multi-purpose kitchen appliance.

Moreover, a multi-purpose kitchen appliance comprising a base station and a cookware 100 is disclosed.

## Description

The present invention concerns an insert plate for insertion into a pot of a multi-purpose kitchen appliance. The invention further concerns a cookware comprising a pot and such insert plate. Moreover, the invention concerns a multi-purpose kitchen appliance with a base station and such cookware.

Multi-purpose kitchen appliances have become an established and popular device offering a user a wide range of possibilities for easy and conveniently preparing meals in a timesaving manner. They typically comprise a cookware with a pot, and a base station defining a use position for the pot. Therein, controlled by means of the base station, ingredients may be weighed, heated and treated, such as cut into pieces or stirred, for instance.

A respective tool for such treatment is typically removably fixed to a tool holder penetrating a centre hole in the bottom of the pot and extending into the interior space of the pot. The tool holder is adapted to be coupled to a shaft which is rotatable by means of a driving unit comprised by the base station. Moreover, the tool holder closes the hole in the bottom.

It is an object of the present invention to provide a technique offering a further advantageous function for a multi-purpose kitchen machine.

The object is achieved by an insert plate according to claim 1, a cookware according to claim 7 and a multi-purpose kitchen appliance according to claim 11. Advantageous embodiments are disclosed in the dependent claims, the description and the figures.

An insert plate according to the present invention is configured to be removably inserted into a pot of a multi-purpose kitchen appliance. The insert plate has a support surface designated to support food to be heated in the pot (i.e., designated for food being applied thereon). Therein, the support surface extends over a centre (in particular, a central area) of the insert plate.

A cookware according to the present invention is configured as a component of a multi-purpose kitchen appliance. It comprises a pot configured to be combined with a base station of the multi-purpose kitchen appliance. Moreover, the cookware comprises at least one an insert plate according to an embodiment of the present invention. As is to be understood, the insert plate is applicable with the pot, i.e., suitable for being removably inserted therein.

A multi-purpose kitchen appliance according to the present invention comprises a base station and a cookware according to an embodiment of the present invention. As is to be understood, the cookware is compatible with the base station, i.e., the pot thereof is adapted to be combined with the base station.

The present invention thus facilitates that, when the insert plate has been inserted in the pot, food to be heated may be placed also on a centre of the insert plate. Thereby, as compared to a conventional use of a pot of a multi-purpose kitchen appliance, in which food has to be arranged around the tool holder for heating it, the insert plate according to the present invention provides an enlarged surface for heating food, as its support surface extends over a centre of the insert plate. As a consequence, larger pieces may be heated as a whole, and the user is relieved from having to appropriately arrange the food in the pot around the tool holder. Advantageously, the insert plate may be configured as a heater plate for grillables. Moreover, the insert plate according is well adapted to be used for sous vide cooking.

In particular, the support surface may preferably have a hole-free central area.

According to advantageous embodiments, the insert plate is at least partially made of metal, such as aluminium and/or cast iron. Therewith, a particularly good heat transfer from the bottom of the pot to the insert plate may be achieved.

The support surface of the insert plate may form one or more grooves respectively extending between corresponding ribs delimiting the groove(s); in particular, the support surface may be at least partially corrugated. A respective surface of the ribs (in particular respective ridges thereof) may preferably extend along a same (common) plane. Therewith, a stable positioning of the food is facilitated. Depending on the stiffness of the respective food applied on the support surface, the food may thus contact only the ribs, thus being held away from the respective ground of the groove(s). Therewith, the risk of burning the food is reduced. Moreover, by means of said grooves, an eventually undesirable softening of the respective food can be avoided, as the food is physically separated from fluid eventually leaking therefrom, which fluid is collected in the grooves. In embodiments with various grooves, at least two of them may extend along concentric circles and/or at least two of them may extend along parallel lines, for instance. At least two of the grooves may be connected by at least one respective interconnection allowing a fluid to flow from one of the grooves to the other.

According to advantageous embodiments, the insert plate comprises at least one fastening means for fastening (alone or in combination with a further means) the insert plate to a bottom of the pot. Preferably, in such embodiments, the fastening means is positioned at a side opposite to said support surface.

For instance, the at least one fastening means may comprise a recess in a/the ground surface opposite to the support surface, the recess having a screw thread configured to receive a screw element penetrating the ground of the pot. Additionally or alternatively, the at least one fastening means may comprise an intake in a/the ground surface opposite to the support surface, the intake configured to receive a latch penetrating the ground, for example.

According to advantageous embodiments of the present invention, the insert plate comprises a protrusion on a ground surface opposite to the support surface, the protrusion configured to be inserted into a hole in a/the bottom of the pot. Such hole may be a through hole in the bottom or a recess formed therein. Preferably, the protrusion is positioned in a centre of said ground surface. For instance, the protrusion may comprise a trunnion.

In particular, the protrusion may preferably comprise at least one combination means (such as a screw thread, a component of a bayonet lock and/or a latch, for instance) to be combined with a fixation element so as to fix the insert plate to the pot, in particular to a bottom thereof.

Preferably, the insert plate according to the present invention is configured to rest on an inner surface of a bottom of the pot. In particular, a/the ground surface of the insert plate opposite to the support surface may be - or at least include at least a region being - planar and/or configured to two-dimensionally contact a bottom surface of the pot when the insert plate is inserted in the pot. According to preferred embodiments, when inserted in the pot, the insert plate covers and/or contacts at least 90% or at least 95% of a bottom surface facing an interior of the pot.

The ground surface of the insert plate may preferably have an essentially circular outer edge. The/a centre axis of the insert plate may preferably be orthogonal to the ground surface, in particular (in respective embodiments) to said planar ground surface or region thereof.

The insert plate may preferably have a diameter of at least 15 cm or at least 18cm. Additionally or alternatively, it may have a diameter of at most 25cm or at most 22 cm.

According to advantageous embodiments, the cookware according to the present invention further comprises a tool holder configured to be coupled with a rotatable shaft of the base station, the tool holder being detachably mountable on a/the bottom of the pot. For instance, the tool holder may be configured to support a (preferably exchangeable) tool such as a rotatable knife assembly, a grater or a stirring means. The insert plate is preferably configured to be selectively secured to the bottom instead of the tool holder.

In particular, the cookware may comprise at least one seal element configured to selectively seal a transition between the tool holder and the pot, or a transition between the insert plate and the pot. Additionally or alternatively, the cookware may comprise at least one fixation element configured to selectively engage with the tool holder (in particular, with a combination feature thereof) or the insert plate (in particular, with a combination counter means thereof) so as to secure either the tool holder or the insert plate, respectively, to the bottom of the pot.

These embodiments thus facilitate fixation and/or sealing, respectively, of the insert plate using a respective element applicable also with the tool holder, thus having various functions. Accordingly, a number of components of the cookware and - therewith - an effort in space and tidiness for storing it can be kept small.

Preferably, the cookware according to the present invention further comprises a lid.

In the following, preferred embodiments of the present invention are explained with respect to the accompanying drawings. As is to be understood, the various elements and components are depicted as examples only, may be facultative and/or combined in a manner different than that depicted. Reference signs for related elements are used comprehensively and not defined again for each figure.

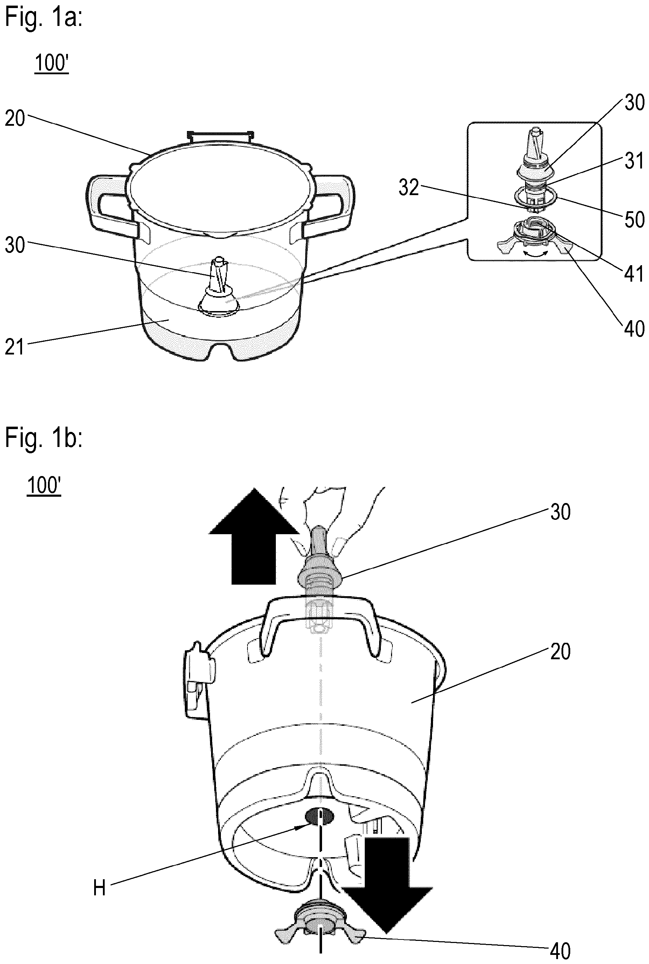

Shown is schematically in
- Fig. 1a:: an exemplary cookware according to the state of the art;
- Fig. 1b:: a process of disassembly of the cookware of Figure 1a;

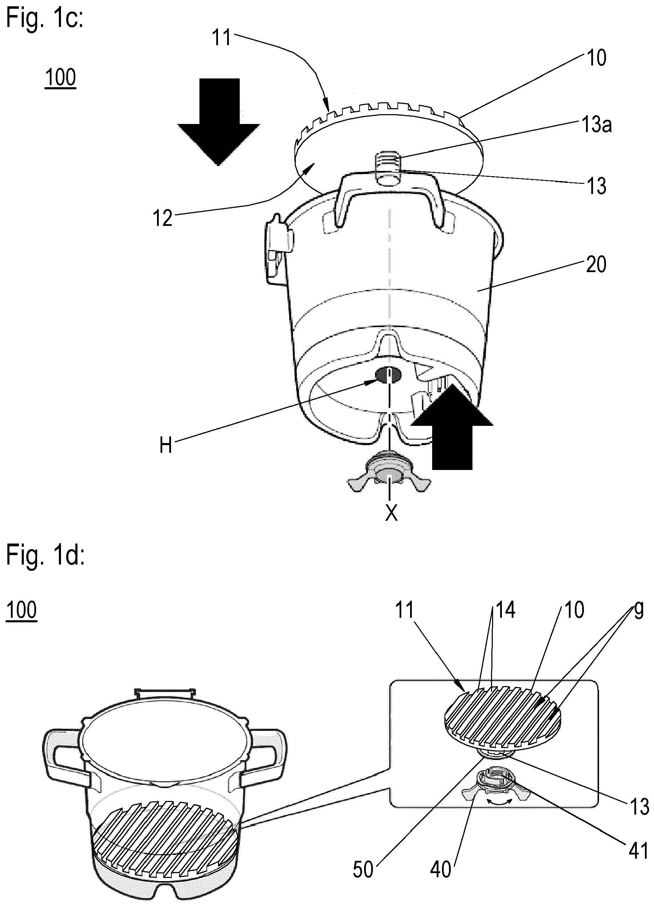

- Fig. 1c:: a cookware according to an embodiment of the present invention in a process of insertion of an insert plate into a pot;
- Fig. 1d:: the cookware of Figure 1c with the inserted insert plate.

In Figure 1a, an exemplary cookware 100' according to the state of the art is illustrated. As detailed below, an insert plate according to the present invention may preferably be an accessory for such cookware 100'.

The cookware 100' comprises a pot 20 configured to be combined with a base station (not shown) of a multi-function kitchen appliance. Such base station preferably includes a heater element for heating the pot 20 (and its respective content), and a drive unit (such as an electric motor). Moreover, the base station may comprise a weighing device for weighing a respective content of the pot 20.

The cookware 100' further comprises a tool holder 30 configured to be coupled, by means of a clutch element 32, to the drive unit when the pot is combined with the base station, and to hold a respective exchangeable rotation tool (not shown) such as a rotatable knife assembly, a grater or a stirring means, for instance. The tool holder 30 protrudes from a bottom 21 of the pot 20 into the interior space thereof. Therein, as illustrated in the supplemental detail view of Figure 1a, the tool holder 30 comprises a combination feature 31, and the tool holder 30 is fixed by means of a fixation element 40 comprising a combination counter means 41 configured to engage with the tool holder 30, in particular with the combination feature 31 thereof. In the present exemplary case, the combination feature 31 and the combination counter means 41 are configured as associated screw threads; they are accordingly configured to be rotated relative to each other to combine the tool holder 30 with the fixation element 40.

To mount the tool holder 30 to the bottom 21 of the pot 20, the fixation element 40 and the tool holder are combined from different sides of the bottom 21, so as to clamp the bottom 21. Therein, a seal element 50 is configured to be positioned between the tool holder 30 and the bottom 21. By means of the seal element 50, a transition between the tool holder 30 and the pot 20 is sealed, such that in particular fluid eventually contained by the pot does not escape.

In particular, for mounting the tool holder to the bottom 21 of the pot 20, an end of the tool holder 30 (the end comprising the clutch element 32) is inserted into a hole H in the bottom 21, as can be derived from Figure 1b showing the reversed process of separating the tool holder 30 from the pot 20 by detaching the fixation element 40 from the tool holder 30.

After such separation, an insert plate 10 according to the present invention can be removably inserted into the pot 20 and fixed therein, as illustrated in Figure 1c showing a cookware 100 according to an exemplary embodiment of the present invention. The cookware 100 comprises a pot 20 and an insert plate 10 according to the present invention.

The insert plate 10 has a circular outer edge and a support surface 11 designated to support food to be heated thereon in the pot 20. The support surface 11 extends over a centre of the insert plate, which centre in the present case is defined by a centre axis X. In particular, the insert plate 10 is hole-free. As a consequence, the insert plate 10 provides an extended cooking surface, devoid of a central elevation such as a tool holder which may possibly disturb in certain utilisations of the cookware, such as when barbecuing grillware.

On a ground surface 12 opposite to the support surface and extending orthogonally to the centre axis X, the insert plate has a protrusion 13. In the example depicted, the protrusion is configured as a trunnion about a portion of the centre axis X, and it has a combination means 13a which in the present case is configured as a screw thread. To install the insert plate 10 and to fix it to the pot 20, the protrusion 13 is plugged into the hole H in the bottom 21 of the pot, with the sealing element 50 positioned in between, as illustrated in the detail view of Figure 1d. Thereafter, the fixation element 40 is fixed, from the other side of the bottom 21 of the pot 20, to the protrusion 13 by way of the combination means 13a of the protrusion 13 (as visible in Figure 1c) and the combination counter means 41 of the fixation element 40 engaging with each other. Such combined, the sealing element 50 seals the transition between the insert plate 10 and the pot 20. In particular, the insert plate 10 closes the hole H in the bottom 21 of the pot 20.

In utilisation, some vegetable oil put into the pot may improve the heat transfer from the bottom 21 of the pot 20 to the insert plate 10.

As is best seen in Figure 1d, the support surface 11 of the insert plate 10 forms a plurality of grooves g each extending between respective two ribs 14; to improve clarity of the figure, only two of the grooves and two of the ribs are referenced therein. The respective ridges of the ribs 14 extend along a common (abstract) plane which in the present case is parallel to the ground surface 12 of the insert plate 10.

Preferably, the cookware 100 further comprises the tool holder 30 shown in Figures 1a, 1b. In particular, the cookware 100 preferably is an extension of the cookware 100', and the insert plate 10 an additional accessory for the cookware 100'.

Disclosed is an insert plate 10 for removable insertion into a pot 20 of a multi-purpose kitchen appliance. The insert plate 10 has a support surface 11 for food to be heated in the pot. Therein, the support surface 11 extends over a centre of the insert plate 10. Further disclosed is a cookware 100 for/of a multi-purpose kitchen appliance. The cookware 100 comprises an insert plate 10 and a pot 20 configured to be combined with a base station of the multi-purpose kitchen appliance.

Moreover, a multi-purpose kitchen appliance comprising a base station and a cookware 100 is disclosed.

### Reference signs

- 100, 100': cookware

- 10: insert plate
- 11: support surface
- 12: ground surface
- 13: protrusion
- 13a: combination means
- 14: rib

- 20: pot
- 21: bottom

- 30: tool holder
- 31: combination feature
- 32: clutch element

- 40: fixation element
- 41: combination counter means

- 50: seal element

- g: groove
- H: hole
- X: centre axis

## Claims

1. Insert plate (10) for removable insertion into a pot (20) of a multi-purpose kitchen appliance, wherein the insert plate (10) has a support surface (11) for food to be heated in the pot, the support surface (11) extending over a centre of the insert plate.

2. Insert plate according to claim 1, wherein the insert plate comprises at least one fastening means for fastening the insert plate to a bottom (21) of the pot (20).

3. Insert plate according to one of claims 1 or 2, wherein the insert plate comprises a protrusion (13) on a ground surface (12) opposite to the support surface (11), the protrusion configured to be inserted into a hole (H) in a/the bottom (21) of the pot (20).

4. Insert plate according to claim 3, wherein the protrusion comprises at least one combination means (13a) to be combined with a fixation element (40) so as to fix the insert plate to the pot.

5. Insert plate according to one of the preceding claims, wherein the support surface (11) forms one or more groove/s (g).

6. Insert plate according to one of the preceding claims, which is at least partially made of metal.

7. Cookware (100) for/of a multi-purpose kitchen appliance, the cookware comprising an insert plate (10) according to one of the preceding claims and a pot (20) configured to be combined with a base station of the multi-purpose kitchen appliance.

8. Cookware according to claim 7, further comprising a tool holder (30) configured to be coupled with a rotatable shaft of the base station, wherein the tool holder is detachably mountable on a/the bottom (21) of the pot (20), and wherein the insert plate (10) is configured to be selectively secured to the bottom instead of the tool holder (30).

9. Cookware according to claim 8, further comprising at least one fixation element (40) configured to selectively engage with the tool holder (30) or the insert plate (10) so as to secure the tool holder or the insert plate, respectively, to the bottom of the pot.

10. Cookware according to one of claims 8 or 9, further comprising at least one seal element (50) configured to selectively seal a transition between the tool holder (30) and the pot (20) or a transition between the insert plate (10) and the pot (20).

11. Multi-purpose kitchen appliance comprising a base station and a cookware (100) according to one of claims 7 to 10.
